# EUROPEAN PATENT APPLICATION

(11) **EP 2 418 340 A2**
(43) Date of publication of application: **15.02.2012**
(21) Application number: 11250715.7
(22) Date of filing: 09.08.2011
(51) Int. Cl.: E04H 17/16, E04H 17/18

(54) **A fencing panel**

(30) Priority: 11.08.2010 GB 1013437
(71) Applicant: ZND (UK) Limited, Parkgate Rotherham S62 6JL (GB)
(72) Inventor: McLean, James, Sheffield S36 8WH (GB)
(74) Representative: Chapman, Paul Nicholas

(57) **Abstract**

A fencing panel for forming part of a temporary fencing, comprising a frame (105), an anchor member (301) and a hook member (115). The frame includes a first tubular element (106) and a second tubular element (107) arranged substantially parallel to the first tubular element. Each tubular element (106, 107) has a leg portion at one end and an end portion (112, 114) at an opposite end. The anchor member (301) is fixed into the end portion (114) of the first tubular element, and the hook member (115) is fixed to the end portion of the first tubular element by the anchor member. The end portion (114) of the first tubular element (106) is a deformed portion having a shape which conforms to the shape of the anchor member.

## Description

### BACKGROUND OF THE INVENTION

### 1. Field of the Invention

The present invention relates to a fencing panel for forming part of a temporary fencing, and a method of manufacturing such a fencing panel.

### 2. Description of the Related Art

It is known to provide temporary fencing, for example around building works, comprising a number of panels temporarily connected together. The panels are formed of a frame comprising a pair of vertical tubular elements, and the tubular elements define legs that, in use, are located in appropriately shaped holes of heavy concrete blocks providing feet.

In some countries it is common to provide a hook on one end of the frame so that the hook may be located in a vertical tubular element of an adjacent fence panel to connect them together. In other countries such a hook is generally not used and instead a separate coupling device is used to hold vertical elements of adjacent panels together.

Thus, for the manufacturer of such fence panels, it is necessary to manufacture and stock fence panels of both types, with and without the hook, if they are to supply both markets. It is therefore desirable to have a means by which panels that have been produced without a hook may be simply and quickly fitted with a hook.

### BRIEF SUMMARY OF THE INVENTION

According to a first aspect of the present invention, there is provided a fencing panel for forming part of a temporary fencing as claimed in claim 1.

According to a second aspect of the present invention, there is provided a method of manufacturing a fencing panel for forming part of a temporary fencing as claimed in claim 8.

### BRIEF DESCRIPTION OF THE SEVERAL VIEWS OF THE DRAWINGS

Figure 1 shows two fencing panels 101 and 102 for providing temporary fencing;
Figure 2 shows the fencing panels 101 and 102 of Figure 1 after having been assembled together to form temporary fencing 201;
Figure 3 shows a detailed view of the connection between the first fencing panel 101 and the second fencing panel 102;
Figure 4 shows a metal strip 401 that is bent to form a connection member;
Figure 5 shows five different views of a connection member 501;
Figure 6 shows the connection member 501 positioned above the first tubular member 106 of a fence panel, ready for the anchor member 301 to be fitted within the cylindrical bore of the first tubular member;
Figure 7 shows the anchor member 301 of the connection member 501 after being fitted into the tubular element 106.

### DETAILED DESCRIPTION OF EXAMPLE EMBODIMENTS

### Figure 1

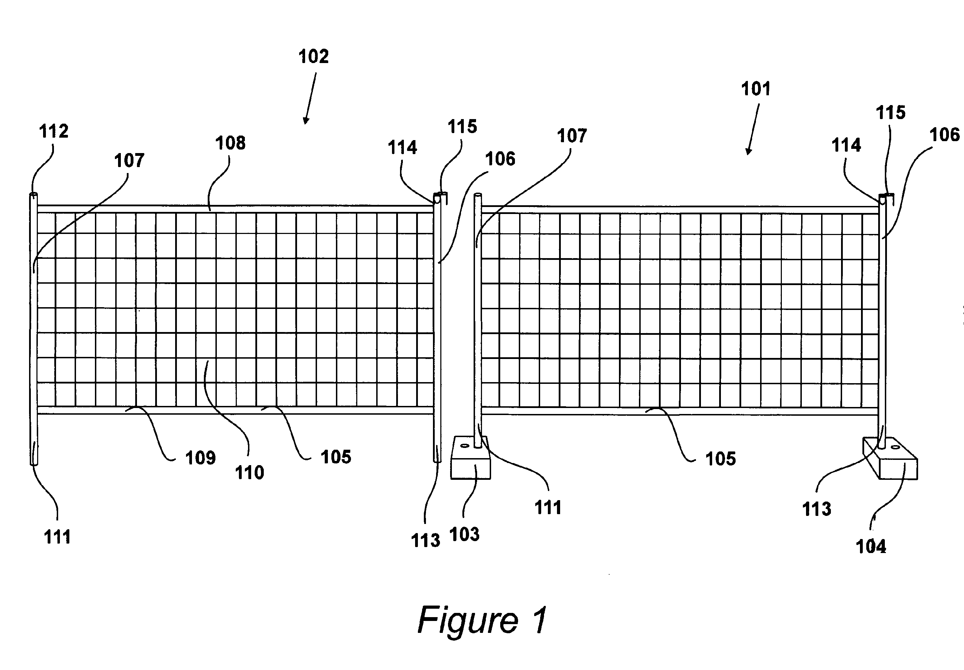

Two fencing panels 101 and 102 for providing temporary fencing are shown in Figure 1. The two fencing panels 101 and 102 are substantially identical, and so each of them embodies the present invention. The first fencing panel 101 is shown mounted vertically on feet 103 and 104 in the form of heavy blocks (for example concrete blocks) defining holes, while the second fencing panel 102 is shown on its own.

The fencing panels 101 and 102 each comprise a frame 105 formed of a first tubular element 106 and a second tubular element 107 arranged substantially parallel to the first tubular element. An upper cross-member 108 and a lower cross-member 109 are welded at their ends to a respective one the two tubular element 106 and 107 to form a substantially rectangular shaped opening. A sheet of material 110 is welded to the frame 105 to cover the rectangular opening. In the present embodiment the sheet of material is a sheet formed of welded wire mesh.

The second tubular elements 107 have a leg portion 111 at one end and an end portion 112 at the opposite end. The end portion 112 has an open end such that the cylindrical bore of the tubular element 107 is accessible.

The first tubular elements 106 have a leg portion 113 at one end and an end portion 114 at the opposite end. The first tubular element 106 differs from the second tubular element 107 in that it has a hook member 115 fixed to its end portion 114 by means of an anchor member (not shown in Figure 1). The hook member 115 has a hook shape and is dimensioned to fit within the open end of a second tubular member of a similar fence panel. Thus, for example, the hook member 115 of the first fencing panel 101 may be fitted into the open end of the second tubular member 107 of the second fencing panel 102. By this means, adjacent fencing panels may be connected when forming a temporary fencing.

For example, a temporary fencing may be formed by locating the leg portions 111 and 113 of the fencing panel (such as 101) in blocks (such as blocks 103 and 104). The leg portions of a second fencing panel (such as 102) are then located in two blocks, one (103) of which is used by the first fencing panel. At the same time, the hook member 115 of the second panel (102) is located in the open end of the second tubular member 107 of the first panel (101).

### Figure 2

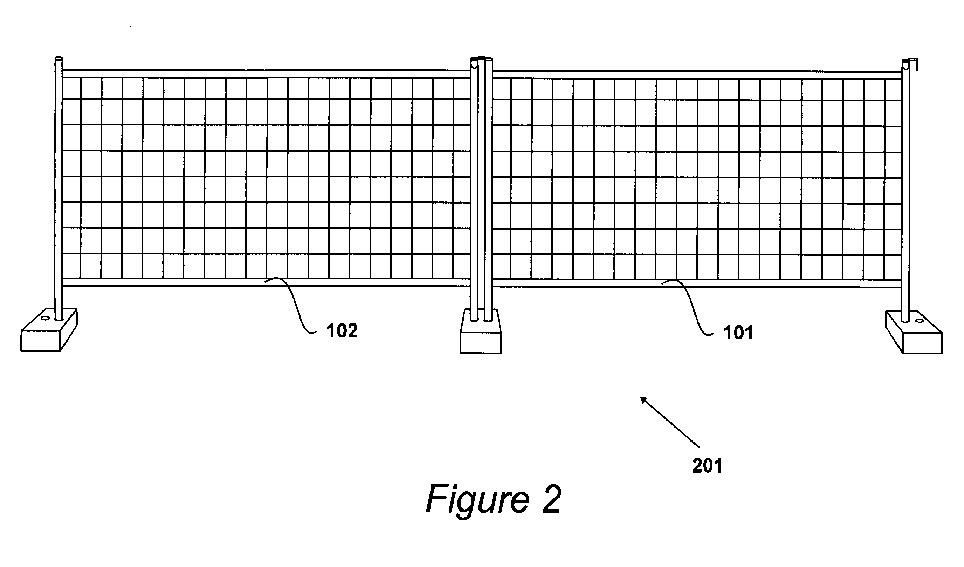

The fencing panels 101 and 102 of Figure 1 are shown again in Figure 2 after the two panels have been assembled together to form temporary fencing 201, as described above. It will be understood that further similar fencing panels and blocks (similar to blocks 103 and 104) may be used to further extend the length of the temporary fencing.

Similar types of assembly of a temporary fencing are known, but the fencing panels (such as 101 and 102) of the present invention differ from known panels by the means in which the hook member is attached to the first tubular member.

### Figure 3

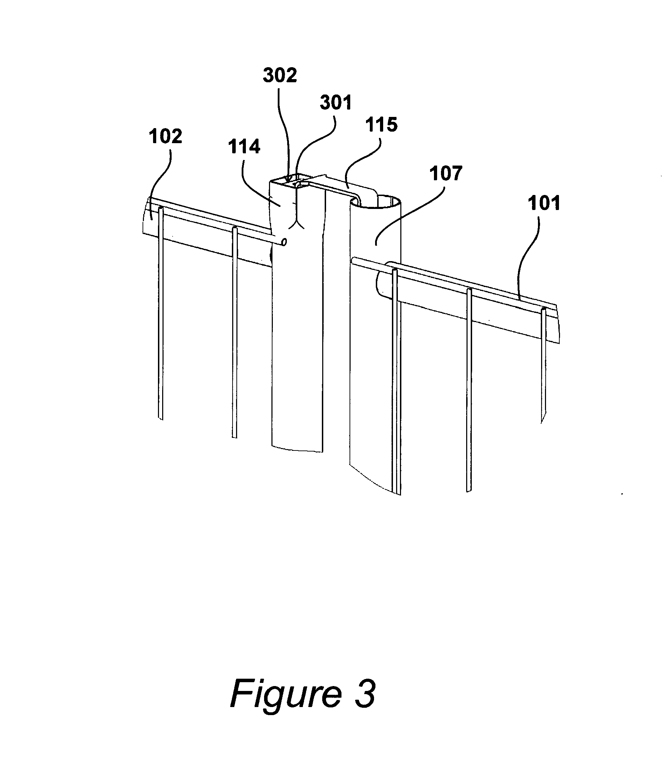

A detailed view of the connection between the first fencing panel 101 and the second fencing panel 102 is shown in Figure 3.

As may be seen in Figure 3, the second tubular member 107 is substantially cylindrical in form, and the hook member 115 of the second fencing panel 102 is dimensioned such that it is can easily fit within the bore of the tubular member 107.

While the distal end of the hook member 115 remains free to be inserted into tubular members such as 107, the proximal end of the hook member 115 is fixed to the end portion 114 of the first tubular member 106 by an anchor member 301. (An upper surface 302 of the anchor member 301 is visible in Figure 3.)

The tubular member 106 is generally similar to tubular member 107 and is generally of a cylindrical shape. However, the end portion 114 of the first tubular member 106 is deformed due to the presence of the anchor member 301 within its bore.

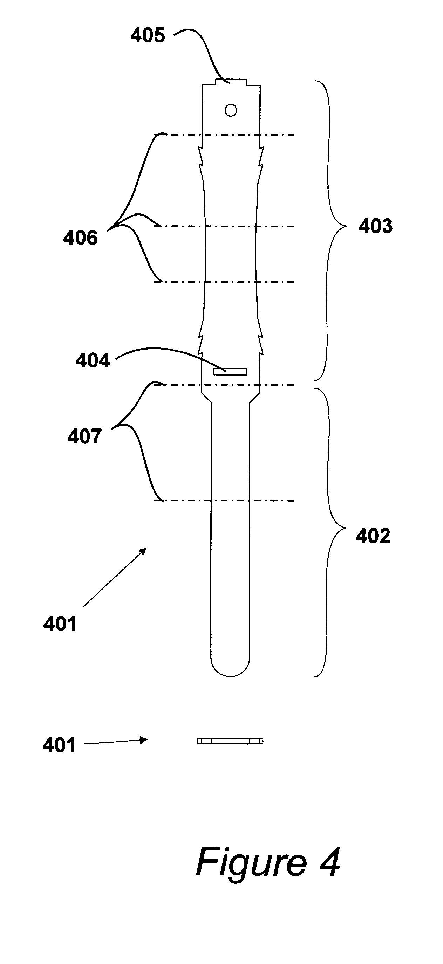

The nature of the anchor member 301 and the means by which it fixes the hook member 115 to the first tubular member 106 will be described below with reference to Figures 4 to 7.

### Figure 4

Embodiments of the present invention are envisaged in which the hook member 115 and the anchor member 301 are formed as separate components. However, in the present embodiment, the hook member 115 and the anchor member 301 are formed as different parts of a single item, namely a connection member. In the present embodiment, the connection member is formed of a single strip of metal that is bent to form the anchor member and the hook member.

To manufacture the connection member of the present embodiment, a strip of metal is firstly punched from a sheet of metal. The metal strip 401 so produced is shown in Figure 4. The metal strip 401 has a hook portion 402 that is subsequently bent to form the hook member 115, and an anchor portion 403 that is subsequently bent to form the anchor member 301. The anchor portion 403 defines a slot 404 towards one end, adjacent the hook portion 402, and a tab 405 at its opposite free end. The tab 405 is dimensioned to fit within the slot 404.

To form the anchor member 301 the anchor portion 403 is bent around three lines (indicated by dotted lines 406) and the tab 405 is inserted into the slot 404. The hook portion 402 is bent around lines (indicated by dotted lines 407) to form the hook member 115.

### Figures 5 and 6

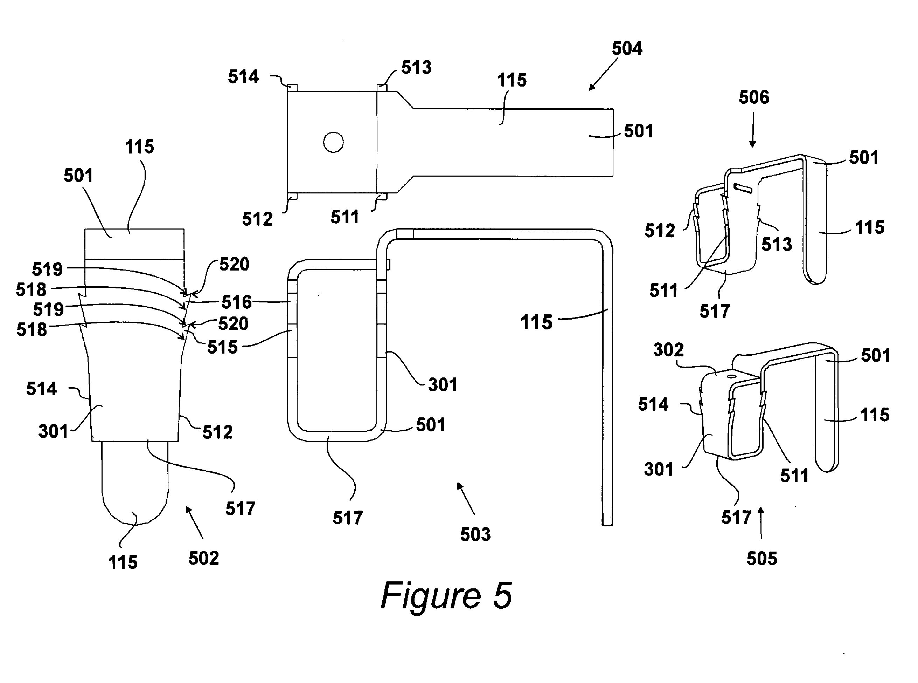

The connection member 501 formed of the hook member 115 and the anchor member 301 is shown in five different views in Figure 5. Specifically, the connection member 501 is shown in a front view at 502, a side view at 503, a plan view at 504, an upper perspective view at 505 and a lower perspective view at 506.

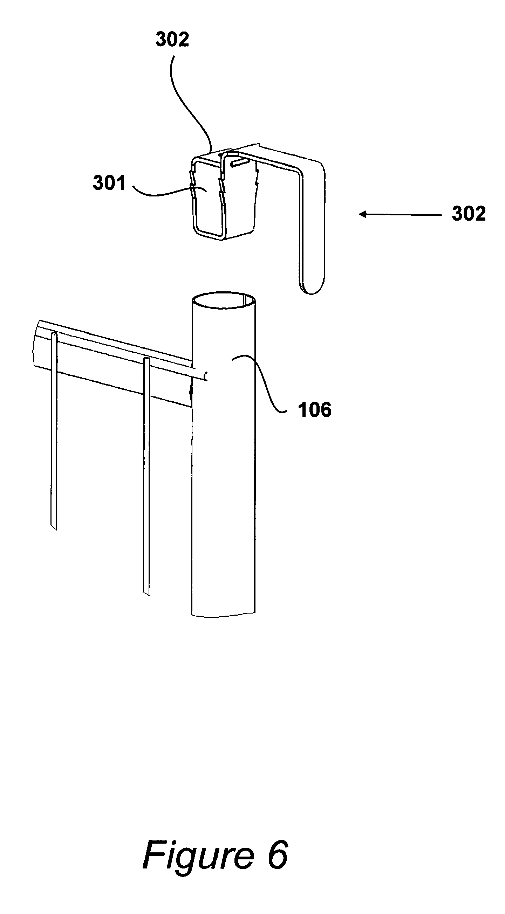

The connection member 501 is shown in Figure 6 positioned above the first tubular member 106 of a fence panel that does not have a hook member fitted, ready for the anchor member 301 to be fitted within the cylindrical bore of the first tubular member.

As illustrated in Figure 5, the anchor member 301 is formed of a loop having a rectangular box shape with four edges 511, 512, 513 and 514. These edges, during use, extend along the bore of the first tubular element.

In the present embodiment, each of the edges 511, 512, 513 and 514 is provided with a pair of barbs, such as barbs 515 and 516 formed on the edge 512.

The anchor member 301 is dimensioned at its free end 517 to fit within the open end of the cylindrical bore of the first tubular member 106. However, the anchor member is shaped such that at a position spaced from its free end, it has a dimension that is greater than the diameter of the cylindrical bore. In the present embodiment, the barbs, such as the barbs 515 and 516 produce this larger dimension.

It may be noted that the barbs have a saw-tooth shape having a tapering edge 518 nearest the free end 517, and a second edge 519 at an acute angle to the tapering edge 518, to produce a sharp edge 520. The tapering edge 518 allows the anchor member 301 to be driven into the open end of the first tubular member 106. Specifically as the anchor member 301 is driven into the open end of the cylindrical bore, the tapering edges 518 act upon the inside of the wall of the tubular member to deform the wall. Typically, the anchor member is driven into the bore by a repeated hammering action applied to its upper surface 302, for example by using a pneumatic tool.

### Figure 7

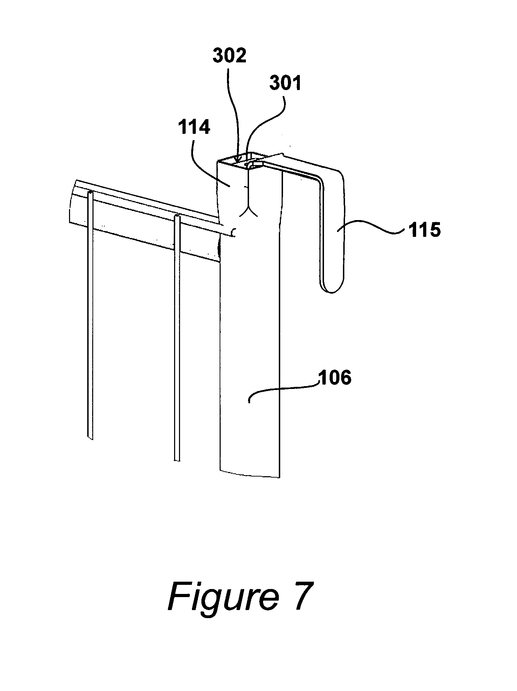

The anchor member 301 of the connection member 501 is shown in Figure 7 after being fitted into the tubular element 106.

In the present embodiment the anchor member 301 is driven until its barbs are entirely within the bore of the tubular element 106. As the anchor member is hammered into position, the edges 511, 512, 513 and 514 apply forces to the wall of the first tubular element 106 such that its end portion 114 is deformed into a non-cylindrical shape to conform to the shape of the anchor member. Thus, in the present embodiment, the end portion 114 is deformed into an approximate square shape from its original circular shape.

Due to the shape of the edges 511 to 514 of the anchor member 301 and the fact that the anchor element 301 has been fitted into the tubular member by deforming it, the anchor member 301 is fixed in place and resists being withdrawn. Furthermore, because the end portion 114 is deformed to conform to the shape of the anchor member 301, and because that shape is non-cylindrical, the anchor member, and so the hook member, resist rotation within the tubular element 106.

As illustrated in Figure 7, the hook member 115 is arranged to lie in the same plane as the frame of the fencing panel.

In the present embodiment, the anchor member 301 is driven such that the upper surface 302 of the anchor member 301 is within the bore of the tubular element 106, but alternative embodiment are envisaged where a part of the anchor member extends out from the tubular element 106.

In the present embodiment the anchor member 301 and hook member 115 are formed of bent sheet metal. However, in alternative embodiments the anchor member and/or the hook member are formed of a metal casting. In the present example the anchor member 301 is provided with the four prominent edges 511 to 514, but in alternative embodiments the anchor member is provided with a plurality of prominent edges numbering more or less that four.

## Claims

1. A fencing panel (101, 102) for forming part of a temporary fencing, comprising:
a frame (105) including a first tubular element (106) and a second tubular element (107) arranged substantially parallel to said first tubular element, each said tubular element having a leg portion at one end and an end portion (112, 114) at an opposite end;
an anchor member (301) fixed into the end portion (114) of said first tubular element (106);
a hook member (115) fixed to the end portion of the first tubular element by said anchor member,
wherein the end portion of the first tubular element is a deformed portion having a shape which conforms to the shape of said anchor member.

2. A fencing panel according to claim 1, wherein said hook member (115) and said anchor member (301) are integral parts of a connection member (501).

3. A fencing panel according to claim 1 or claim 2, wherein said connection member (501) is formed of a single strip (401) of metal bent to form said anchor member (301) and said hook member (115).

4. A fencing panel according to any one of claims 1 to 3, wherein a non-deformed part said first tubular element (106) has a cylindrical bore, and said end portion (114) of the first tubular element is deformed into a non-cylindrical shape to conform to the shape of said anchor member.

5. A fencing panel according to any one of claims 1 to 4, wherein said anchor member has a plurality of edges (511, 512, 513 and 514) extending along said first tubular member (106) and said edges applying a force to the inside surface of the first tubular element.

6. A fencing panel according to any one of claims 1 to 5, wherein said edges are provided with barbs (520) and said barbs provide a force on the inside surface of the first tubular element.

7. A fencing panel according to any one of claims 1 to 6, wherein said hook member (115) is dimensioned to fit within an open end of a second tubular member (107) of a similar fencing panel (102, 101).

8. A method of manufacturing a fencing panel (101, 102) for forming part of a temporary fencing, said fencing panel including a frame (105) having a first tubular element (106) and a second tubular element (107) arranged substantially parallel to said first tubular element, each said tubular element having a leg portion at one end and an end portion (112, 114) at an opposite end, wherein said method comprises forcing an anchor member (301) into the end portion (114) of said first tubular element (106) causing the end portion of the first tubular element to become deformed and formed around said anchor member, thereby fixing a hook member (115) to the end portion of the first tubular element by said anchor member.

9. A method of manufacturing a fencing panel according to claim 8, wherein said hook member (115) and said anchor member (301) are integral parts of a connection member (501).

10. A method of manufacturing a fencing panel according to claim 8 or claim 9, wherein said connection member (501) is formed by bending a single strip (401) of metal to form said anchor member and said hook member.

11. A method of manufacturing a fencing panel according to any one of claims 8 to 10, wherein a non-deformed part said first tubular element (106) has a cylindrical bore, and said end portion (114) of the first tubular element is deformed into a non-cylindrical shape to conform to the shape of said anchor member (301).

12. A method of manufacturing a fencing panel according to any one of claims 8 to 11, wherein said anchor member (301) has four edges (511, 512, 513 and 514) extending along said first tubular member (106) and, during insertion of said anchor element into said first tubular member, said end portion of the first tubular element is deformed by the action of said edges on the inside surface of the first tubular element.

13. A method of manufacturing a fencing panel according to any one of claims 8 to 12, wherein said edges are provided with barbs (520) and, during insertion of said anchor element into said first tubular member (106), said end portion of the first tubular element is deformed by the action of said barbs on the inside surface of the first tubular element.

14. A method of manufacturing a fencing panel according to any one of claims 8 to 13, wherein said hook member (115) is dimensioned to fit within an open end of a second tubular member of a similar fencing panel.

15. A method of manufacturing a fencing panel according to any one of claims 8 to 14, wherein said anchor member (301) is forced into the bore of the end portion (114) of said first tubular element (106) by a repeated hammering action applied to said anchor member.
